# EUROPEAN PATENT SPECIFICATION

(11) **EP 1 174 466 B1**
(45) Date of publication and mention of the grant of the patent: **02.11.2006**
(21) Application number: 00902105.6
(22) Date of filing: 04.02.2000
(51) Int. Cl.: C08L 51/08, C08F 283/12, C08L 101/00

(54) **FLAME RETARDANT, PROCESS FOR PRODUCING THE SAME, AND FLAME-RETARDANT RESIN COMPOSITION CONTAINING THE SAME**
FLAMMSCHUTZMITTEL, VERFAHREN ZU DESSEN HERSTELLUNG UND FLAMMSCHUTZMITTELHARZZUSAMMENSETZUNG DIESES ENTHALTEND
MATERIAU IGNIFUGEANT, PROCEDE DE PRODUCTION ET COMPOSITION IGNIFUGEANTE A BASE DE RESINE RENFERMANT CE MATERIAU

(30) Priority: 04.02.1999 JP 2717799
(43) Date of publication of application: 23.01.2002
(73) Proprietor: MITSUBISHI RAYON CO., LTD., Tokyo 108-8506 (JP)
(72) Inventor: FUJII, Hideyuki, Otake Pl.,Mitsubishi R. Co., Ltd., Otake-shi Hiroshima 739-0693 (JP)
(74) Representative: TER MEER - STEINMEISTER & PARTNER GbR
(86) International application number: PCT/JP2000/000630
(87) International publication number: WO 2000/046293

(56) References cited:
- EP-A- 1 160 290
- JP-A- 5 339 461
- JP-A- 7 033 836
- JP-A- 7 238 218
- JP-A- 8 259 791
- US-A- 4 894 415

## Description

### TECHNICAL FIELD

The present invention relates to a flame retardant, a process for producing the flame retardant, and a flame retardant resin composition containing the flame retardant. In particular, the present invention relates to a flame retardant comprised of a graft copolymer containing a polyorganosiloxane able to impart superior flame retardance to a thermoplastic resin.

### BACKGROUND ART

Thermoplastic resins used for home electric appliances, office automation apparatuses, construction materials, automobile parts, etc. are being required to exhibit a higher level of flame retardance every year in order to prevent the spread of disasters due to the spreading of flames at the time of fires.

In the past, the general methods of imparting flame retardance to such thermoplastic resins have included the method of using or mixing and using a halogen-containing resin such as polyvinyl chloride, the method of adding a large amount of a halogen-containing compound (halogen-based flame retardant), the method of adding a phosphorus-containing compound (phosphorus-based flame retardant), and the method of adding a metal hydroxide etc.

A halogen-containing resin or a flame retardant thermoplastic resin composition containing a halogen-based flame retardant, however, suffers from the problem that corrosive gases and toxic gases are produced at the time of burning or heat decomposition, an antimony compound used as a flame retardant aid has toxicity, etc.

Further, a phosphorus-based flame retardant and a metal hydroxide has a relatively low effect in imparting flame retardance and requires addition in a large amount in order to make a thermoplastic resin flame retardant. It has the defect of reducing the physical properties inherently held by a thermoplastic resin and detracts from the surface appearance of the molded article.

To solve these problems of conventional flame retardants, various new flame retardants are being studied. Among these, silicon compounds such as polyorganosiloxane are being studied by various researchers as environmentally friendly flame retardants not producing much toxic gas etc.

For example, Japanese Examined Patent Publication (Kokoku) No. 3-48947 discloses that a silicone resin comprised of R₃SiO_{0.5} units (M units) and SiO₂ units (Q units), silicone, and a Group IIA metal salt are effective for imparting flame retardance to a plastic. Further, Japanese Examined Patent Publication (Kokoku) No. 62-60421 discloses that a polysiloxane resin containing at least 80 wt% of RSiO_{1.5} units (T units) is effective for imparting flame retardance to a thermoplastic nonsilicone polymer. However, in the method for imparting flame retardance by adding a silicone resin or polysiloxane resin to a thermoplastic resin disclosed in Japanese Examined Patent Publication (Kokoku) No. 3-48947 and Japanese Examined Patent Publication (Kokoku) No. 62-60421, the dispersability of the silicone resin or polysiloxane resin added in a thermoplastic resin is insufficient. In particular, the examples of Japanese Examined Patent Publication (Kokoku) No. 3-48947 describe that laminar exfoliation is observed in a molded resin article given flame retardance by addition of a silicone resin.

Further, Japanese Unexamined Patent Publication (Kokai) No. 10-139964 discloses that a silicone resin having units represented by R₂SiO_{1.0} and RSiO_{1.5} and having a weight average molecular weight of at least 10,000 and not more than 270,000 can efficiently impart flame retardance to a nonsilicone resin containing an aromatic ring. The silicone resin described in Japanese Unexamined Patent Publication (Kokai) No. 10-139964, however, is inferior in kneadability since the discharge of resin from a kneader is disturbed at the time of kneading with a nonsilicone resin. To improve this, it is necessary to combine an inorganic filler such as silica powder as shown in the examples. There is therefore the defect that the physical properties and moldability of the resultant flame retardant resin composition are impaired.

Further, Japanese Unexamined Patent Publication (Kokai) No. 5-202280 proposes a flame retardant polycarbonate resin composition containing a polyorganosiloxane fluid-filler blend. Japanese Unexamined Patent Publication (Kokai) No. 8-113712 proposes a method of imparting flame retardance by dispersing a silicone resin polymer powder comprised of a polyorganosiloxane polymer and silica filler in an organic resin. With these methods, the kneadability with an organic resin (in particular the handling at the time of kneading) and the flame retardance are improved by combination of the polyorganosiloxane and filler, but there was the problems of a decline in the surface appearance (in particular the surface smoothness) of the molded resin article derived from use of the filler and a decline in the mechanical properties such as the impact resistance.

Further, Japanese Unexamined Patent Publication (Kokai) No. 63-137964 and Japanese Unexamined Patent Publication (Kokai) No. 1-318069 propose, as a method of using a silicone as a flame retardant additive, mixing a silicone emulsion and organic thermoplastic polymer dispersion under specific conditions, then mixing the coagulated and recovered silicone-containing powder polymer mixture into a thermoplastic resin. With these methods, while the kneadability at the time of preparation of the flame retardant resin and the handling of the silicone-containing polymer mixture are superior, the effect of imparting flame retardance of the silicone-containing polymer mixture is not sufficient. As shown in the examples, it is necessary to make joint use of another flame retardant such as a bromine-containing compound or a phosphorus-containing compound.

On the other hand, Japanese Unexamined Patent Publication (Kokai) No. 5-339510 and Japanese Unexamined Patent Publication (Kokai) No. 8-302211 propose a method of imparting flame retardance by adding polyorganosiloxane resins of specific structures to thermoplastic resins. With these methods, however, the effect of imparting flame retardance of the polyorganosiloxane resin is not sufficient and it is necessary to jointly use another flame retardant such as a phosphoric acid ester.

Further, as a method of combining a polyorganosiloxane in a thermoplastic resin, Japanese Patent No. 2558126 proposes a method of adding to a polycarbonate resin a graft copolymer obtained by graft polymerizing a vinyl monomer with a composite rubber comprised of a polyorganosiloxane component and alkyl (meth)acrylate rubber component mutually entangled so as not to be separable. Further, Japanese Unexamined Patent Publication (Kokai) No. 7-316409 discloses that this graft copolymer is effective in imparting flame retardance to a polycarbonate resin composition. In the method of Japanese Unexamined Patent Publication (Kokai) No. 7-316409, however, the effect of imparting flame retardance of a composite rubber-based graft copolymer is not sufficient and joint use of a flame retardant such as a phosphoric acid ester-based compound is required. There are the problems of a decline in the moldability and a decline in the physical properties due to the flame retardant jointly used.

That is, in the past, in the method of imparting flame retardance to a thermoplastic resin using a polyorganosiloxane, no polyorganosiloxane-based flame retardant has yet been discovered which exhibits a high effect of imparting flame retardance and an excellent handling at the time of kneading and kneadability and resulting in little decline in the molded appearance and physical properties of the thermoplastic resin composition due to its addition. Development of a flame retardant satisfying these needs is strongly desired.

### DISCLOSURE OF THE INVENTION

An object of the present invention is to provide a flame retardant exhibiting a high effect in imparting flame retardance and good handling and kneadability at the time of kneading and resulting in little reduction of the molded appearance and physical properties of the thermoplastic resin composition due to its addition.

The present inventors engaged in intensive studies on the flame retardance of resin compositions for addition to thermoplastic resins for polymers containing polyorganosiloxane and as a result surprisingly discovered that a graft copolymer obtained by graft polymerization of a vinyl monomer with a composite polymer comprised of a polyorganosiloxane comprised of a specific composition and a vinyl polymer can efficiently give flame retardance to a thermoplastic resin as a flame retardant and thereby completed the present invention.

That is, the present invention provides a flame retardant comprising a graft copolymer (A) obtained by graft polymerizing at least one vinyl monomer with a composite polymer ((a-1)+(a-2)) comprised of (a-1) a polyorganosiloxane containing an aromatic group and (a-2) a vinyl polymer, a process for producing the flame retardant, and a flame retardant resin composition containing the flame retardant.

### BEST MODE FOR CARRYING OUT THE INVENTION

The polyorganosiloxane (a-1) containing an aromatic group forming part of the graft copolymer (A) in the present invention is a polyorganosiloxane containing an aromatic group at the polysiloxane side chain and/or end. As the aromatic group, a phenyl group, biphenyl group, naphthyl group, and a ring-substituted phenyl group such as a 4-methylphenyl group, 4-ethylphenyl group, and 4-chlorophenyl group may be mentioned. Among these, a phenyl group is preferable considering the ease of production of the polyorganosiloxane (a-1).

Further, the polyorganosiloxane (a-1) containing an aromatic group can contain an organic group other than an aromatic group at the polysiloxane side chain and/or end. Further, as the organic group, an alkyl group such as a methyl group, ethyl group, propyl group, and butyl group, an alkoxyl group such as a hydroxy group, methoxy group, and ethoxy group, a mercapto-substituted alkyl group such as a mercaptopropyl group, an amino-substituted alkyl group such as an aminopropyl group, a methacryl group-containing substituent such as a γ-methacryloxypropyl group, a vinyl group, an alicyclic group such as a cyclohexyl group, a fluoroalkyl group, an epoxy group-containing substituent, etc. may be mentioned.

As specific examples of the polyorganosiloxane (a-1) containing an aromatic group, there are a polyorganosiloxane comprised of diphenylsiloxane units and dimethylsiloxane units, a polyorganosiloxane comprised of a methylphenylsiloxane component, etc.

In the present invention, the polyorganosiloxane (a-1) must contain an aromatic group such as the above. When comprised of a polyorganosiloxane not containing an aromatic group, the performance as a flame retardant, that is, the effect of imparting flame retardance to a thermoplastic resin, is inferior.

Further, the polyorganosiloxane (a-1) containing an aromatic group can have a crosslinked structure or branched structure through siloxane bonds.

The most preferred forms of the polyorgano-siloxane (a-1) containing an aromatic group are diphenylpolysiloxane having a vinyl polymerizing functional group such as a methacryloyloxy group, mercapto group, or vinyl group at the side chain and/or end, a diphenylsiloxane-dimethylsiloxane copolymer having a vinyl polymerizing functional group such as a methacryloyloxy group, mercapto group, or vinyl group at its side chain and/or end, and a phenylmethylpolysiloxane having a vinyl polymerizing functional group such as a methacryloyloxy group, mercapto group, or vinyl group at its side chain and/or end.

The vinyl polymerizing functional group contained in each preferred polyorganosiloxane (a-1) has the effect of facilitating the production of the composite polymer ((a-1)+(a-2)) comprised of the polyorganosiloxane (a-1) containing an aromatic group and the vinyl polymer (a-2) when producing the graft copolymer (A).

As a process for producing the above polyorganosiloxane (a-1) containing an aromatic group, a process may be mentioned comprising emulsifying a mixture including a siloxane containing an aromatic group and, if necessary, a siloxane not containing an aromatic group, a siloxane containing a vinyl polymerizing functional group, and a siloxane-based crosslinking agent and/or a branching agent by an emulsifying agent and water, reducing the obtained latex to fine particles using a homomixer forming fine particles by the shear force resulting from high speed rotation, a homogenizer forming fine particles by the jet force of a high pressure generator, etc., then causing polymerization at a high temperature using an acid catalyst, then neutralizing the acid by an alkaline substance.

As the method of adding the acid catalyst used for the polymerization, there are a method of mixing the siloxane mixture, emulsifying agent, and water, a method of adding dropwise a latex of fine particles of a siloxane mixture into a high temperature acid aqueous solution, etc.

Further, as the siloxane compound containing an aromatic group used in the production of the polyorganosiloxane (a-1), an aromatic group-containing cyclic siloxane compound of an at least three-member ring such as a diphenylsiloxane-based cyclic compound or a phenylmethylsiloxane-based cyclic compound, an aromatic group-containing linear siloxane oligomer such as a linear diphenylsiloxane oligomer, linear diphenylsiloxane-dimethylsiloxane oligomer, linear phenylmethylsiloxane oligomer, linear phenylmethylsiloxane-dimethylsiloxane oligomer, or linear diphenyl siloxane-phenylmethylsiloxane oligomer, etc. may be mentioned. Among these, considering the ease of preparation of the polyorganosiloxane (a-1) and the ease of preparation of the graft copolymer (A) containing these, an aromatic group-containing linear siloxane oligomer such as a linear diphenylsiloxane oligomer, linear diphenylsiloxane-dimethylsiloxane oligomer, linear phenylmethylsiloxane oligomer, linear phenylmethylsiloxane-dimethylsiloxane oligomer, or linear diphenylsiloxane-phenylmethylsiloxane oligomer is preferable. More preferable is an aromatic group-containing linear siloxane oligomer having a viscosity at 25°C of not more than 1000 cP. Still more preferable is an aromatic group-containing linear siloxane oligomer selected from a linear diphenylsiloxane oligomer, linear diphenylsiloxane-dimethylsiloxane oligomer, and linear phenylmethylsiloxane oligomer containing a hydroxy group or alkoxy group at its end and having a viscosity at 25°C of not more than 500 cP.

Further, as specific examples of a siloxane compound not containing an aromatic group able to be optionally used, a dimethylsiloxane-based cyclic compound of an at least three-member ring etc. may be mentioned. Specifically, hexamethylcyclotrisiloxane, octamethylcyclotetrasiloxane, decamethylcyclopentasiloxane, dodecamethylcyclohexasiloxane, etc. may be mentioned. These may be used alone or in mixtures of two or more.

Further, the vinyl polymerizing functional group-containing siloxane able to be optionally used for the production of the polyorganosiloxane (a-1) containing an aromatic group may be one containing a vinyl polymerizing functional group and able to bond with a diorganosiloxane through the siloxane bond. Considering the reactivity with a diorganosiloxane, various alkoxysilane compounds containing vinyl polymerizing functional groups are preferable. Specifically, methacryloyloxysiloxanes such as β-methacryloyloxyethyldimethoxymethylsilane, γ-methacryloyloxypropyldimethoxymethylsilane, γ-methacryloyloxypropylmethoxydimethylsilane, γ-methacryloyloxypropylmethoxytrimethylsilane, γ-methacryloyloxypropylethoxydiethylsilane, γ-methacryloyloxypropyldiethoxymethylsilane, and δ-methacryloyloxybutyldiethoxymethylsilane, vinyl siloxanes such as tetramethyltetravinylcyclotetra-siloxane, and mercaptosiloxanes such as p-vinylphenyldimethoxymethylsilane, γ-mercaptopropyldimethoxymethylsilane, and γ-mercaptopropyltrimethoxysilane may be mentioned. These vinyl polymerizing functional group-containing siloxanes may be used alone or in mixtures of two or more types.

Further, as the siloxane-based crosslinking agent and/or branching agent able to be optionally used for the production of the polyorganosiloxane (a-1) containing an aromatic group, a trifunctional or tetrafunctional silane-based crosslinking agent, for example, trimethoxymethylsilane, triethoxyphenylsilane, tetramethoxysilane, tetraethoxysilane, tetrabutoxysilane, etc. may be used.

Further, as the emulsifying agent useful when producing the polyorganosiloxane (a-1), an anionic emulsifying agent is preferable. An emulsifying agent selected from sodium alkylbenzenesulfonate, sodium polyoxyethylene nonylphenyl ether sulfuric acid ester, etc. is used. In particular, a sulfuric acid-based emulsifying agent such as sodium alkylbenzenesulfonate is preferable. These emulsifying agents should be used in a range of 0.05 to 5 parts by weight or so based on 100 parts by weight of a siloxane mixture. If the amount used is too small, the state of dispersion may become unstable and the fine particle size emulsified state may no longer be held. Further, if the amount used is too large, the resin composition shaped article may be colored due to the emulsifying agent.

As the method for mixing the siloxane mixture, emulsifying agent, water, and/or acid catalyst, there are mixing by high speed stirring, mixing by a high pressure emulsifying apparatus such as a homogenizer, etc. The method of using a homogenizer is preferable since the distribution of the particle size of the polyorganosiloxane latex becomes smaller.

As the acid catalyst used for the polymerization of the polyorganosiloxane (a-1), a sulfonic acid such as an aliphatic sulfonic acid, aliphatic group-substituted benzenesulfonic acid, and aliphatic group-substituted naphthalenesulfonic acid and mineral acids such as sulfuric acid, hydrochloric acid, and nitric acid may be mentioned. These acid catalysts may be used alone or in combinations of two or more. Further, among these, in terms of the superior action in stabilizing a polyorganosiloxane latex, an aliphatic group-substituted benzenesulfonic acid is preferable. An n-dodecylbenzenesulfonic acid is particularly preferable. Further, if n-dodecylbenzenesulfonic acid and a mineral acid such as sulfuric acid are used together, it is possible to reduce the coloring of the resin composition due to the emulsifying agent component of the polyorganosiloxane latex.

The polymerization temperature for the polyorganosiloxane (a-1) is preferably at least 50°C, more preferably at least 80°C.

The polymerization time for the polyorganosiloxane (a-1) is preferably at least 2 hours, more preferably at least 5 hours, when mixing an acid catalyst along with the siloxane mixture, emulsifying agent, and water and reducing the same to fine particles for polymerization. With the method of adding dropwise a latex comprised of the fine particles of the siloxane mixture in an aqueous solution of an acid catalyst, it is preferable to hold the resulting product for about 1 hour after finishing adding the latex. The polymerization may be stopped by cooling the reaction solution and neutralizing the latex by an alkaline substance such as sodium hydroxide, potassium hydroxide, or sodium carbonate.

At this time, after cooling the reaction solution, by allowing the solution to stand at a temperature of not more than room temperature for at least 10 hours, preferably at least 20 hours, before neutralization, the polymerization degree of the polyorganosiloxane increases. Due to this, the storage stability of the polymer latex at the time of preparing the graft polymer (A) tends to be improved.

In the present invention, the vinyl polymer (a-2) forming part of the graft copolymer (A) is a polymer of vinyl monomers. Preferably, it is a crosslinkable polymer obtained by copolymerization of a monofunctional vinyl monomer and polyfunctional vinyl monomer.

As the monofunctional vinyl monomer used for the production of the vinyl polymer (a-2), aromatic alkenyl compounds such as styrene, α-methylstyrene, and vinyltoluene, methacrylic acid esters such as methyl methacrylate, ethyl methacrylate, and 2-ethylhexyl methacrylate, acrylic acid esters such as methyl acrylate, ethyl acrylate, and butyl acrylate, vinyl cyanide compounds such as acrylonitrile and methacrylonitrile, maleimide compounds such as N-phenylmaleimide, unsaturated acid anhydrides such as maleic anhydride, halogenated vinyl compounds such as vinyl chloride, unsaturated hydrocarbons such as ethylene and propylene, and unsaturated carboxylic acids such as acrylic acid and methacrylic acid may be mentioned. These may be used alone or in combinations of two or more. Among these, considering the ease of formation of a composite polymer ((a-1)+(a-2)) with a polyorganosiloxane (a-1) containing an aromatic group, at least one monomer selected from acrylic acid esters, methacrylic acid esters, and aromatic alkenyl compounds is preferable.

Further, as a polyfunctional vinyl monomer used for the production of a vinyl polymer (a-2), polyfunctional alkyl (meth)acrylates such as allyl (meth)acrylate, ethyleneglycol di(meth)acrylate, propyleneglycol di(meth)acrylate, 1,3-butyleneglycol di(meth)acrylate, and 1,4-butyleneglycol di(meth)acrylate may be mentioned.

The composite polymer ((a-1)+(a-2)) comprised of a polyorganosiloxane (a-1) containing an aromatic group and a vinyl polymer (a-2) forming components of the graft copolymer (A) in the present invention may be prepared by adding the above vinyl monomer into a latex of the polyorganosiloxane (a-1) and causing an ordinary radical polymerization initiator to act on it for polymerization. As the method of adding the vinyl monomer, there is a method of mixing it together with the latex of the polyorganosiloxane (a-1) and the method of adding it dropwise into a latex of the polyorganosiloxane (a-1) at a constant speed. Note that considering the flame retardance of the resin composition containing the obtained graft copolymer (A), the method of mixing it together with a latex of the polyorganosiloxane (a-1) is preferable.

In the present invention, the amount of the polyorganosiloxane (a-1) containing an aromatic group in the composite polymer ((a-1)+(a-2)) is not particularly limited, but considering the performance (effect of imparting flame retardance) of the graft copolymer (A) as a flame retardant, 10 to 99 wt% is preferable. If less than 10 wt%, the amount of the polyorganosiloxane is small, so the effect of imparting flame retardant may easily become low. On the other hand, if over 99 wt%, the dispersability of the graft copolymer (A) in the thermoplastic resin falls and surface appearance of the shaped article may easily decline. Considering both of the effect of imparting flame retardance of the graft copolymer (A) and the shaped appearance of the resin composition containing the same, the amount of the polyorganosiloxane (a-1) in the composite polymer ((a-1)+(a-2)) is more preferably 50 to 95 wt%, still more preferably 60 to 95 wt%.

As the radical polymerization initiator used for the polymerization, a peroxide, azo-based initiator, or redox-based initiator comprised of a combination of a peroxide and a reducing agent may be used. Among these, a redox-based initiator is preferable. In particular, a sulfoxylate-based initiator comprised of a combination of ferrous sulfate, disodium ethylenediaminetetraacetate, Rongalit, and hydroperoxide is preferable.

The polymerization temperature when obtaining the composite polymer ((a-1)+(a-2)) is not particularly limited, but preferably is 50 to 90°C.

The graft copolymer (A) may be produced by graft polymerizing at least one vinyl monomer with a composite polymer produced by emulsion polymerization as explained above.

The vinyl monomer used for obtaining a graft copolymer (A) according to the present invention is not particularly limited. For example, there may be mentioned aromatic alkenyl compounds such as styrene, α-methylstyrene, and vinyltoluene, methacrylic acid esters such as methyl methacrylate, ethyl methacrylate, and 2-ethylhexyl methacrylate, acrylic acid esters such as methyl acrylate, ethyl acrylate, and butyl acrylate, and vinyl cyanide compounds such as acrylonitrile and methacrylonitrile. These may be used alone or jointly in two or more. Among these, considering the flame retardance of the graft copolymer (A) and molded appearance of the resin composition containing this, a mixture of styrene and acrylonitrile, and methyl methacrylate are preferable.

Graft polymerization may be performed by adding at least one vinyl monomer to a latex of a composite polymer ((a-1)+(a-2)) and performing radical polymerization by one stage or several stages. Further, the monomer used in the graft polymerization may have added to it various chain transfer agents for adjusting the molecular weight and graft rate of the graft polymer.

The amount of the vinyl monomer of the monomer used for forming the graft copolymer (A) according to the present invention is not particularly limited, but the amount of the vinyl monomer is preferably 0.1 to 50 wt% based on the graft copolymer (A). If the amount of the vinyl monomer is less than 0.1 wt%, the molded appearance of the resin composition containing the graft copolymer (A) tends to fall. On the other hand, if over 50 wt%, the effect of imparting flame retardance of the graft copolymer (A) tends to fall. Considering both the effect of imparting flame retardance of the graft copolymer (A) and molded appearance of the resin composition containing the same, the more preferable range of the vinyl monomer is 1 to 30 wt%, more preferably 1 to 20 wt%, still more preferably 1 to 15 wt%.

In obtaining the graft copolymer (A), the polymerization temperature is not particularly limited, but may be 60 to 90°C.

Further, the particle size of the graft copolymer (A) prepared as explained above is not particularly limited, but considering both the effect of imparting flame retardance and the impact resistance and molded appearance of the resin composition containing the same, the number average particle size is preferably 0.05 to 1.0 µm, more preferably 0.10 to 0.50 µm.

The graft copolymer (A) according to the present invention is produced by charging the graft copolymer latex produced as explained above into hot water in which is dissolved a metal salt such as calcium chloride, calcium acetate, or aluminum sulfate and salting it out and coagulating it so as to separate the graft copolymer and recover it in a powder form.

The graft copolymer (A) according to the present invention is used as a flame retardant to be added to a thermoplastic resin for imparting flame retardance to the thermoplastic resin added to.

The effect of imparting flame retardance characterizing the flame retardant according to the present invention indicates the function of improving the flame retardance of the thermoplastic resin. This can be evaluated by measuring the difference in the flammability of the resin by the addition of a flame retardant.

As the method of measuring the flammability, for example, the burning test of Underwriters Laboratories (UL) of the U.S., that is, the vertical test of UL94, etc. may be mentioned. The flammability may be evaluated by the burning time of a test piece in the test, the dripping, and the burning rank.

The flame retardant resin composition may be produced by adding a flame retardant of the present invention (graft copolymer (A)) to a thermoplastic resin. As the thermoplastic resin used, polymethyl methacrylate, acrylonitrile-butadiene-styrene copolymer (ABS resin), acrylonitrile-acrylate-styrene copolymer (ASA resin), acrylonitrile-ethylene-propylene-diene-styrene copolymer (AES resin), polycarbonate resin, polybutylene terephthalate (PBT resin), polyethylene terephthalate (PET resin), polyvinyl chloride, polyethylene, polypropylene, and other polyolefins, styrene-butadiene-styrene (SBS), styrene-butadiene (SBR), hydrogenated SBS, styrene-isoprene-styrene (SIS), and other styrene-based elastomers, various olefin-based elastomers, various polyester-based elastomers, polystyrene, methyl methacrylate-styrene copolymer (MS resin), acrylonitrile-styrene copolymer (AS resin), polyacetal resin, modified polyphenylene ether (modified PPE resin), ethylene-vinyl acetate copolymer, PPS resin, polyallylate, liquid crystal polyester resin, polyamide resin (Nylon), etc. may be mentioned. These may be used alone or jointly in two or more. In particular, the effect of imparting flame retardance of the flame retardant of the present invention appears remarkably in a polycarbonate resin and a blend of a polycarbonate resin and ABS resin.

The flame retardant of the present invention is preferably added in a range of 1 to 50 parts by weight, particularly a range of 3 to 30 parts by weight, based on 100 parts by weight of the thermoplastic resin.

The flame retardant of the present invention may be obtained by a known method of mixing and kneading with the above thermoplastic resin composition, for example, a method of weighing and mixing a predetermined amount of a thermoplastic resin in a bead or pellet state and melting and kneading the obtained mixture etc. At the time of melting and kneading, an extruder or a Banbury mixer, pressure kneader, roll, or other kneading machine may be used.

The flame retardant resin composition containing the flame retardant of the present invention may be used as is for the material for producing a shaped article. Further, in accordance with need, a dye, pigment, stabilizer, reinforcer, filler, flame retardant aid, etc. may be added. Among these, polytetrafluoroethylene is useful as a flame retardant aid for suppressing dripping at the time of burning.

The flame retardant resin composition containing the flame retardant of the present invention is made into the desired molded article by various molding methods such as injection molding, extrusion, blow molding, compression molding, calendering, and inflation molding.

As examples of industrial applications of a flame retardant resin composition containing a flame retardant of the present invention, PC housings, battery cases, mobile phone housings, printer housings, copier housings, facsimile housings, or other parts of office automation equipment and communications equipment, various building materials, sheets, instrument panels, and other automobile interior parts, diningware, vacuum cleaner housings, television housings, air-conditioner housings, and other parts of home electric apparatuses, syringes, catheters, and other medical equipment, etc. may be mentioned.

Next, the present invention will be explained further with reference to examples. Note that in the following reference examples, examples of the invention, and comparative examples, "parts" and "%" mean "parts by weight" and "wt%" unless otherwise indicated.

The absorbances of the polyorganosiloxane latex in the reference examples and the graft copolymer latex in the examples of the invention and the comparative examples were measured for the latexes adjusted to a solid concentration of 0.5 g/liter by using a UV visible spectrophotometer UV-160 made by Shimadzu Corp. and under conditions of a wavelength of 700 nm.

The weight average molecular weight of the polyorganosiloxane in the reference examples was found by recovering the polyorganosiloxane latex by causing it to precipitate in isopropyl alcohol, drying this at room temperature in a vacuum, then dissolving this in tetrahydrofuran, measuring the solution using a GPC made by Waters Co., then converting to standard polystyrene by the retention time.

The kneadability of each of the resin compositions in the examples of the invention and the comparative examples was evaluated by visually observing the state of discharge of the resin from extruder die openings when kneading and extruding the resin composition by a twin-screw extruder for pelletization. Note that the criteria for the evaluations are given below:
G: Good (discharge of resin from die openings is smooth)
F: Fair (discharge of resin from die openings is sometimes disturbed)
P: Poor (discharge of resin from die openings is disturbed and pelletization is difficult)

The shaped appearance of the resin compositions in the examples of the invention and the comparative examples was evaluated by visually examining the surface of a shaped plate obtained by injection molding by an injection molding mold of 100 mm x 100 mm x 3 mm thickness using an injection molding machine IS-100EN made by Toshiba Machine under conditions of a cylinder temperature setting of 280°C, a mold temperature of 80°C, and an injection speed of 50%. The shaped appearance was evaluated by the following criteria of judgement.
G: Good, F: Fair - clouding, P: Poor - clouding and decline in gloss

The flame retardance of the resin compositions in the examples of the invention and the comparative examples was evaluated by the burning time and the dripping during burning at the time of a burning test using injection molded test pieces of thicknesses of 3.2 mm and 1.6 mm based on the vertical burning test (UL94V) established in the UL94 standard of Underwriters Laboratories (UL) of the U.S.

### Reference Example 1

### Production of Polyorganosiloxane Latex (S-1)

99.5 parts of terminal methoxydiphenylsiloxanedimethylsiloxane oligomer (XF40-B6197 made by Toshiba Silicone, diphenylsiloxane content = 34 mol%) and 0.5 part of γ-methacryloyloxypropyldimethoxymethylsilane were mixed to obtain 100 parts of a siloxane mixture. 100 parts of the above mixed siloxane were added to 400 parts of distilled water in which one part each of sodium dodecylbenzenesulfonate and dodecylbenzenesulfonic acid had been added. The mixture was prestirred by a homomixer at 10,000 rpm, then emulsified and dispersed by processing four times by a homogenizer at a pressure of 40 MPa to obtain an organosiloxane latex. The mixed solution was transferred to a separable flask provided with a condenser and stirring vane, heated at 80°C for 5 hours while being stirred to mix it, then allowed to stand at 20°C. After 16 hours, the pH of the latex was neutralized to 7.4 by a sodium hydroxide aqueous solution to complete the polymerization and obtain a polyorganosiloxane latex (S-1).

The solid content of the thus obtained polyorganosiloxane latex (S-1) was 17.5%. The absorbance was 0.50. Further, the weight average molecular weight of the polyorganosiloxane in the S-1 was 20000.

### Reference Example 2

### Production of Polyorganosiloxane Latex (S-2)

99.5 parts of terminal silanoldiphenylsiloxanedimethylsiloxane oligomer (YF3804 made by Toshiba Silicone, diphenylsiloxane content = 17 mol%) and 0.5 part of γ-methacryloyloxypropyldimethoxymethylsilane were mixed to obtain 100 parts of a siloxane mixture. 100 parts of the above mixed siloxane were added to 400 parts of distilled water in which one part each of sodium dodecylbenzenesulfonate and dodecylbenzenesulfonic acid had been added. The mixture was prestirred by a homomixer at 10,000 rpm, then emulsified and dispersed by processing four times by a homogenizer at a pressure of 40 MPa to obtain an organosiloxane latex. The mixed solution was transferred to a separable flask provided with a condenser and stirring vane, heated at 80°C for 5 hours while being stirred to mix it, then allowed to stand at 20°C. After 16 hours, the pH of the latex was neutralized to 7.4 by a sodium hydroxide aqueous solution to complete the polymerization and obtain a polyorganosiloxane latex (S-2).

The solid content of the thus obtained polyorganosiloxane latex (S-2) was 17.5%. The absorbance was 0.59. Further, the weight average molecular weight of the polyorganosiloxane in the S-2 was 80000.

### Reference Example 3

### Production of Polyorganosiloxane Latex (S-3)

99.5 parts of octamethylcyclotetrasiloxane (TSF-404 made by Toshiba Silicone) and 0.5 part of γ-methacryloyloxypropyldimethoxymethylsilane were mixed to obtain 100 parts of a siloxane mixture. 100 parts of the above mixed siloxane were added to 400 parts of distilled water in which one part each of sodium dodecylbenzenesulfonate and dodecylbenzenesulfonic acid had been added. The mixture was prestirred by a homomixer at 10,000 rpm, then emulsified and dispersed by processing four times by a homogenizer at a pressure of 40 MPa to obtain an organosiloxane latex. The mixed solution was transferred to a separable flask provided with a condenser and stirring vane, heated at 80°C for 5 hours while being stirred to mix it, then allowed to stand at 20°C. After 16 hours, the pH of the latex was neutralized to 7.4 by a sodium hydroxide aqueous solution to complete the polymerization and obtain a polyorganosiloxane latex (S-3).

The solid content of the thus obtained polyorganosiloxane latex (S-3) was 17.5%. The absorbance was 0.08. Further, the weight average molecular weight of the polyorganosiloxane in the S-3 was 250000.

### Example 1

### Production of Graft Copolymer (A-1)

457 parts of the polyorganosiloxane latex (S-1) prepared in Reference Example 1 were taken in a reactor provided with a chemical-introducing container, cooling tube, jacket heater, and stirring device. 13 parts of distilled water were added, the atmosphere was replaced by nitrogen, then the mixture was raised in temperature to 50°C. A mixed solution of 9.8 parts of n-butyl acrylate, 0.2 part of allyl methacrylate, and 0.2 part of diisopropylbenzene hydroperoxide was charged, the mixture stirred for 30 minutes, then the mixed solution was impregnated in polyorganosiloxane particles. Next, a mixture of 0.001 part of ferrous sulfate, 0.003 part of disodium ethylenediaminetetraacetate, 0.24 part of Rongalit, and 10 parts of distilled water was charged to start the radical polymerization. The mixture was held at an internal temperature of 70°C for 2 hours to complete the polymerization and obtain a composite polymer latex.

A mixture of 0.2 part of diisopropylbenzene hydroperoxide (Percumyl P made by NOF Corp.) and 10 parts of methyl methacrylate was added dropwise to the composite polymer latex at 70°C over 20 minutes, then the mixture was held at 70°C for 2 hours to complete the graft polymerization of the composite polymer. The solid content of the obtained graft copolymer latex was 18.5% and the absorbance was 0.57.

Next, the obtained graft copolymer latex was added dropwise to 400 parts of hot water containing 1.5% of calcium chloride to coagulate it. This was separated and washed, then dried at 80°C for 16 hours to obtain a white powder state graft copolymer (A-1).

### Example 2

### Production of Graft Copolymer (A-2)

Except for changing the polyorganosiloxane latex (S-1) used for polymerization in the production of the graft copolymer A-1 to the polyorganosiloxane latex (S-2) prepared in Reference Example 2, polymerization was performed by the same method as with the production of the graft copolymer A-1 to obtain a white particle state graft copolymer A-2. Note that the solid content of the latex containing the graft copolymer A-2 was 18.6% and the absorbance was 0.66.

### Comparative Example 1

### Production of Graft Copolymer (B-1)

Except for changing the polyorganosiloxane latex (S-1) used for polymerization in the production of the graft copolymer A-1 to the polyorganosiloxane latex (S-3) prepared in Reference Example 3, polymerization was performed by the same method as with the production of the graft copolymer A-1 to obtain a white particle state graft copolymer B1. Note that the solid content of the latex containing the graft copolymer B-1 was 18.5% and the absorbance was 0.11.

### Examples 3 to 8 and Comparative Examples 2 to 5

The graft copolymers A-1, A-2, and B-1 produced in Examples 1 and 2 and Comparative Example 1, a polycarbonate resin (Iupilon S2000 FN, made by Mitsubishi Engineering Plastics), and polytetrafluoroethylene (F201L, made by Daikin Industries) were measured in the amounts shown in Table 1 and sufficiently mixed using a Henschel mixer. The mixtures were shaped by a twin-screw extruder (PCM-30, made by Ikegai Corp.) set to a barrel temperature of 280°C to prepare pellets. The results of the evaluation of the kneadability at that time are shown in Table 1.

The obtained pellets were molded into plates of 100 mm x 100 mm x 3 mm thickness by an injection molding machine set to a cylinder temperature of 280°C and a mold temperature of 80°C. The results of evaluation of the molded appearance of the shaped plates are shown in Table 1.

### Comparative Example 6

Polycarbonate resin (Iupilon S2000 FN, made by Mitsubishi Engineering Plastics) alone was shaped by the same method as the above examples of the invention and comparative examples to form pellets. These were used for evaluating the molded appearance of the molded articles and a burning test. The results are shown in Table 1.

### Comparative Examples 7 and 8

A polycarbonate resin (Iupilon S2000 FN, made by Mitsubishi Engineering Plastics), phenylmethyl silicone oil (TSF-433 made by Toshiba Silicone), and polytetrafluoroethylene (F201L, made by Daikin Industries) were measured in the amounts shown in Table 1 and sufficiently mixed using a Henschel mixer. The mixtures were shaped by a twin-screw extruder (PCM-30, made by Ikegai Corp.) set to a barrel temperature of 280°C to prepare pellets. The results of the evaluation of the kneadability at that time are shown in Table 1.

Note that the formulation of Comparative Example 8 had a poor kneadability in the extruder and pellets could not be obtained.

The pellets of Comparative Example 7 were molded into plates of 100 mm x 100 mm x 3 mm thickness by an injection molding machine set to a cylinder temperature of 280°C and a mold temperature of 80°C. The results of evaluation of the molded appearance of the shaped plate are shown in Table 1.

The surface of the molded article exhibited clouding and a decline in gloss. A good molded plate could not be obtained.

**Table 1**

| | Ex. 3 | Ex. 4 | Ex. 5 | Ex. 6 | Ex. 7 | Ex. 8 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|---|---|
| | 100 | 100 | 100 | 100 | 100 | 100 | 100 | 100 | 100 | 100 | 100 | 100 | 100 |
| Graft copolymer | | | | | | | | | | | | | a |
| A-1 (Ex. 1) | 5 | 11 | 5 | 11 | | | | | | | | | |
| A-2 (Ex. 2) | | | | | 5 | 11 | | | | | | | |
| B-1 (Comp. Ex. 1) | | | | | | | 5 | 11 | 5 | 11 | | | |
| Silicone oil (TSF433) | | | | | | | | | | | | 5 | 11 |
| Teflon | | | 0.3 | 0.3 | 0.3 | 0.3 | | | 0.3 | 0.3 | | 0.3 | 0.3 |
| Result of evaluation of kneadability | G | G | G | G | G | G | G | G | G | G | G | F | P |
| Result of evaluation of molded appearance | G | G | G | G | G | G | G | G | G | G | g | p | - |
| UL94V test, 3.2 mm thickness | | | | | | | | | | | | | |
| Total burning time (sec) | 29 | 20 | 15 | 11 | 21 | 18 | 55 | 39 | 47 | 34 | 210 | - | - |
| No. of drips (out of 10) | 0 | 0 | 0 | 0 | 0 | 0 | 2 | 0 | 0 | 0 | 10 | - | - |
| Judgement | V-0 | V-0 | V-0 | V-0 | V-0 | V-0 | V-2 | V-1 | V-0 | V-0 | Fail | - | - |
| UL94V test, 1.6 mm thickness | | | | | | | | | | | | | |
| Total burning time (sec) | 48 | 41 | 43 | 37 | 49 | 44 | 290 | 105 | 88 | 87 | 312 | - | - |
| No. of drips (out of 10) | 0 | 0 | 0 | 0 | 0 | 0 | 7 | 7 | 0 | 0 | 10 | - | - |
| Judgement | V-0 | V-0 | V-0 | V-0 | V-0 | V-0 | Fail | Fail | V-1 | V-1 | Fail | - | - |

### Examples 9 and 10 and Comparative Examples 9 and 10

The graft copolymer A-1 produced in Example 1, a polyphenylene ether resin (made by Nippon GE Plastic, poly(2,6-dimethyl-1,4-phenylene)ether) having an intrinsic viscosity in chloroform at 25°C of 0.46 dl/g, a polystyrene resin (Sumibright M-140 made by Sumitomo Chemical), a polypropylene resin (BC-6 made by Nippon Polychem), triphenyl phosphate (TPP), and magnesium hydroxide were measured in the amounts shown in Table 2 and sufficiently mixed using a Henschel mixer. The mixtures were shaped by a twin-screw extruder (PCM-30, made by Ikegai Corp.) set to a barrel temperature of 280°C to prepare pellets. The results of the evaluation of the kneadability at that time are shown in Table 2.

The obtained pellets were molded into plates of 100 mm x 100 mm x 3 mm thickness by an injection molding machine set to a cylinder temperature of 280°C and a mold temperature of 80°C. The results of evaluation of the molded appearance of the molded plates are shown in Table 2.

Next, bar-shaped molded plates of 125 mm x 12.5 mm x 3.2 mm thickness and 125 mm x 12.5 mm x 1.6 mm thickness were molded by an injection molding machine set to a cylinder temperature of 280°C and a mold temperature of 80°C. These were used for US94 vertical burning tests. The results are shown in Table 2.

**Table 2**

| | Ex. 9 | Ex. 10 | Comp. Ex. 9 | Comp. Ex. 10 |
|---|---|---|---|---|
| [Formulation (parts)] PP | 100 | | 100 | |
| PPE | | 70 | | 70 |
| PS | | 30 | | 30 |
| Graft polymer | 10 | 10 | | |
| A-1 (Ex. 1) | | | | |
| A-2 (Ex. 2) | | | | |
| B-1 (Comp. Ex. 1) | | | | |
| TPP | | 7 | | 7 |
| Mg(OH)2 | 80 | | 80 | |
| Silicone oil (TSF443) | | | | |
| Result of evaluation of kneadability | Good | Good | Good | Good |
| Result of evaluation of molded appearance | Good | Good | Good | Good |
| UL94V test, 3.2 mm thickness | | | | |
| Total burning time (sec) | 42 | 38 | 64 | 83 |
| No. of drips (out of 10) | 0 | 0 | 2 | 0 |
| Judgement | V-0 | V-0 | V-2 | V-1 |
| UL94V test, 1.6 mm thickness | | | | |
| Total burning time (sec) | 47 | 48 | 239 | 127 |
| No. of drips (out of 10) | 0 | 0 | 8 | 5 |
| Judgement | V-0 | V-0 | V-2 | V-2 |

The following became clear from the above examples of the inventions and the comparative examples:
(1) The resin compositions of Examples 3 to 8 containing the graft copolymers of Examples 1 and 2 (A-1 and A-2) have excellent kneadability with a thermoplastic resin and good molded appearance and exhibit a superior flame retardance satisfying the standard of UL94/V-0 at a thickness of the molded article of 1.6 mm, so the graft copolymers of Examples 1 and 2 are superior in performance as flame retardants for thermoplastic resins.
(2) The resin compositions of Comparative Examples 2 to 5 containing the graft copolymer (B-1) containing a polyorganosiloxane not containing an aromatic group of Comparative Example 1 exhibit a good kneadability with thermoplastic resins and a good molded appearance, but are inferior in the flame retardance in the UL94V test at a thickness of the molded article of 1.6 mm. The graft copolymer (B-1) of the comparative example had low value in industrial utilization as a flame retardant.
(3) The resin compositions of Comparative Examples 6 and 7 are low in kneadability with thermoplastic resins and/or molded appearance of the resin compositions and are low in value as industrial materials.
(4) From Examples 9 and 10 and Comparative Examples 9 and 10, it is learned that the flame retardant of the present invention can effectively impart flame retardant to various resins.

### INDUSTRIAL APPLICABILITY

The present invention, as explained above, exhibits the following special, remarkable effects. Its value in industrial applicability is extremely great.
(1) The graft copolymer according to the present invention is superior in kneadability with a thermoplastic resin as a flame retardant and the molded appearance and flame retardance of the obtained resin composition.
(2) In particular, the balance of the flame retardance and the molded appearance is of an extremely high level which cannot be obtained by a flame retardant mainly comprised of a conventionally known polyorganosiloxane and a thermoplastic resin composition containing the same and has an extremely high value of use as various industrial materials, in particular a housing material of office automation equipment or home electric appliances.

## Claims

1. A flame retardant comprising a graft copolymer (A) obtained by graft polymerizing at least one vinyl monomer with a composite polymer ((a-1)+(a-2)) comprised of (a-1) a polyorganosiloxane containing an aromatic group and (a-2) a vinyl polymer.

2. A flame retardant as set forth in claim 1, wherein the polyorganosiloxane (a-1) containing an aromatic group is selected from the group consisting of diphenyl polysiloxanes containing a vinyl polymerizing functional group at the side chain and/or end, diphenylsiloxane-dimethylsiloxane copolymers having a vinyl polymerizing function group at the side chain and/or end, and phenylmethyl polysiloxanes having a vinyl polymerizing functional group at the side chain and/or end.

3. A flame retardant as set forth in claim 1 or 2, wherein the (a-2) vinyl polymer is a copolymer of a monofunctional vinyl monomer and polyfunctional vinyl monomer.

4. A flame retardant as set forth in any one of claims 1 to 3, wherein the vinyl monomer is selected from the group consisting of aromatic alkenyl compounds, methacrylic acid esters, acrylic acid esters, and vinyl cyanide compounds.

5. A process for producing a flame retardant comprising radical polymerizing a vinyl monomer in the presence of a latex of a polyorganosiloxane containing an aromatic group to form a composite polymer, then graft polymerizing at least one vinyl monomer to give a graft polymer latex and recovering the graft polymer as a powder from the latex.

6. A flame retardant resin composition comprising a flame retardant as set forth in claim 1 and a thermoplastic resin.

7. A composition as set forth in claim 6, wherein the thermoplastic resin is selected from the group consisting of polymethyl methacrylate, acrylonitrile-butadiene-styrene copolymer, acrylonitrile-acrylate-styrene copolymer, acrylonitrile-ethylene-propylene-diene-styrene copolymer, polycarbonate resin, polybutylene terephthalate, polyethylene terephthalate, polyvinyl chloride, styrene-based elastomer, olefin-based elastomer, polyester-based elastomer, polystyrene, methyl methacrylate-styrene copolymer, acrylonitrile-styrene copolymer, polyacetal resin, modified polyphenylene ether, ethylene-vinyl acetate copolymer, PPS resin, polyacrylate, liquid crystal polyester resin, and polyamide resin.

8. A composition as set forth in claim 6 or 7, wherein the flame retardant is contained in an amount of 1 to 50 parts by weight based on 100 parts by weight of the thermoplastic resin.

## Patentansprüche

1. Flammschutzmittel, umfassend ein Pfropfcopolymer (A), erhalten durch Pfropfpolymerisation von mindestens einem Vinyl-Monomer mit einem Komposit-Polymer ((a-1)-(a-2)), umfassend (a-1) ein Polyorganosiloxan, enthaltend eine aromatische Gruppe, und (a-2) ein Vinylpolymer.

2. Flammschutzmittel nach Anspruch 1, worin das Polyorganosiloxan (a-1), welches eine aromatische Gruppe enthält, ausgewählt ist aus der Gruppe, bestehend aus Diphenylpolysiloxanen, welche eine funktionelle Vinyl-Polymerisationsgruppe an der Seitenkette und/oder am Ende enthält, Diphenylsiloxan-Dimethylsiloxan-Copolymeren mit einer funktionellen Vinyl-Polymerisationsgruppe an der Seitenkette und/oder am Ende und Phenylmethylpolysiloxanen mit einer funktionellen Vinyl-Polymerisationsgruppe an der Seitenkette und/oder am Ende.

3. Flammschutzmittel nach einem der Ansprüche 1 oder 2, worin das (a-2)-Vinylpolymer ein Copolymer eines monofunktionellen Vinyl-Monomeren und eines polyfunktionellen Vinyl-Monomeren darstellt.

4. Flammschutzmittel nach einem der Ansprüche 1 bis 3, worin das Vinyl-Monomer ausgewählt ist aus der Gruppe, bestehend aus aromatischen Alkenyl-Verbindungen, Methacrylsäureestern, Acrylsäureestern und Vinylcyanid-Verbindungen.

5. Verfahren zur Herstellung eines Flammschutzmittels, umfassend die radikalische Polymerisation eines Vinyl-Monomers in Gegenwart eines Latex eines Polyorganosiloxans, enthaltend eine aromatische Gruppe, unter Bildung eines Komposit-Polymers, die anschließende Pfropfpolymerisation von mindestens einem Vinyl-Monomer unter Erhalt eines Pfropfpolymerlatex und die Gewinnung des Pfropfpolymers als ein Pulver aus dem Latex.

6. Flammschutzharzzusammensetzung, umfassend ein Flammschutzmittel, wie es in Anspruch 1 definiert ist, und ein thermoplastisches Harz.

7. Zusammensetzung nach Anspruch 6, worin das thermoplastische Harz ausgewählt ist aus der Gruppe, bestehend aus Polymethylmethacrylat, AcrylnitrilButadien-Styrol-Copolymer, Acrylnitril-Acrylat-Styrol-Copolymer, Acrylnitril-Ethylen-Propylen-Dien-Styrol-Copolymer, Polycarbonatharz, Polybutylenterephthalat, Polyethylenterephthalat, Polyvinylchlorid, Sytrol-basiertem Elastomer, Olefin-basiertem Elastomer, Polyester-basiertem Elastomer, Polystyrol, Methylmethacrylat-Styrolcopolymer, Acrylnitril-Styrol-Copolymer, Polyacetalharz, modifiziertem Polyphenylenether, Ethylen-Vinylacetat-Copolymer, PPS-Harz, Polyacrylat, Flüssigkristallpolyesterharz und Polyamidharz.

8. Zusammensetzung nach einem der Ansprüche 6 oder 7, worin das Flammschutzmittel in einer Menge von 1 bis 50 Gewichtsteilen auf der Basis von 100 Gewichtsteilen des thermoplastischen Harzes enthalten ist.

## Revendications

1. Matériau ignifugeant de flamme comprenant un copolymère greffé (A) obtenu par polymérisation avec greffage d'au moins un monomère vinylique avec un polymère composite ((a - 1) + (a - 2)) contenant (a-1) un polyorganosiloxane contenant un groupe aromatique et (a - 2) un polymère vinylique.

2. Matériau ignifugeant selon la revendication 1, dans lequel le polyorganosiloxane (a - 1) contenant un groupe aromatique est choisi dans le groupe constitué par les diphényl polysiloxanes contenant un groupe fonctionnel polymérisant vinylique sur la chaîne latérale et/ou l'extrémité, les copolymères diphénylsiloxane-diméthylsiloxane ayant un groupe de fonction de polymérisation vinylique sur la chaîne latérale et/ou l'extrémité, et les phénylméthyl polysiloxanes ayant un groupe fonctionnel polymérisant vinylique sur la chaîne latérale et/ou l'extrémité.

3. Matériau ignifugeant selon la revendication 1 ou 2, dans lequel le polymère vinylique (a - 2) est un copolymère d'un monomère vinylique monofonctionnel et d'un monomère vinylique polyfonctionnel.

4. Matériau ignifugeant selon l'une quelconque des revendications 1 à 3, dans lequel le monomère vinylique est choisi dans le groupe constitué par les composés alcényles aromatiques, les esters d'acide méthacrylique, les esters d'acide acrylique et les composés de cyanure de vinyle.

5. Procédé de production d'un matériau ignifugeant comprenant la polymérisation radicalaire d'un monomère vinylique en présence d'un latex d'un polyorganosiloxane contenant un groupe aromatique pour former un polymère composite, puis la polymérisation avec greffage d'au moins un monomère vinylique pour donner un latex de polymère greffé et récupérer le polymère greffé sous la forme d'une poudre à partir du latex.

6. Composition ignifugeante à base de résine comprenant un matériau ignifugeant selon la revendication 1 et une résine thermoplastique.

7. Composition selon la revendication 6, dans laquelle la résine thermoplastique est choisie dans le groupe constitué par le méthacrylate de polyméthyle, le copolymère acrylonitrile-butadiène-styrène, le copolymère acrylonitrile-acrylate-styrène, le copolymère acrylonitrile-éthylène-propylène-diène-styrène, la résine polycarbonate, le téréphtalate de polybutylène, le téréphtalate de polyéthylène, le chlorure de polyvinyle, un élastomère à base de styrène, un élastomère à base d'oléfine, un élastomère à base de polyester, le polystyrène, le copolymère méthacrylate de méthyle-styrène, le copolymère acrylonitrile-styrène, la résine polyacétal, l'éther de polyphénylène modifié, le copolymère éthylène-acétate de vinyle, la résine PPS, le polyacrylate, la résine polyester cristal liquide et la résine polyamide.

8. Composition selon la revendication 6 ou 7, dans laquelle le matériau ignifugeant est contenu en une quantité de 1 à 50 parties en poids par rapport à 100 parties en poids de la résine thermoplastique.
